(19)

Europäisches
Patentamt

European
Patent Office

Office européen
des brevets

(11) **EP 3 550 482 A1**

(12) **EUROPÄISCHE PATENTANMELDUNG**

(43) Veröffentlichungstag:
**09.10.2019 Patentblatt 2019/41**

(51) Int Cl.:
***G06Q 10/06*** *(2012.01)*

(21) Anmeldenummer: **18020134.5**

(22) Anmeldetag: **05.04.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Linde Aktiengesellschaft**
**80331 München (DE)**

(72) Erfinder:
• **Windmeier, Christoph**
  **82538 Geretsried (DE)**

• **Obermeier, Andreas**
  **85658 Egmating (DE)**
• **Wunderlich, Bernd**
  **82319 Starnberg (DE)**

(74) Vertreter: **Imhof, Dietmar**
**Linde AG**
**Technology & Innovation**
**Corporate Intellectual Property**
**Dr.-Carl-von-Linde-Straße 6-14**
**82049 Pullach (DE)**

(54) **VERFAHREN ZUR AUSLEGUNGS- UND/ODER PRODUKTIONSPLANUNG BETREFFEND EINE PRODUKTIONSANLAGE**

(57)     Die vorliegende Erfindung betrifft ein Verfahren zur Produktionsplanung einer Produktionsanlage, wobei ein Optimierungsproblem (23) in Abhängigkeit von Ersatzmodellen (21) und Randbedingungen (22) formuliert und gelöst wird zum Auslegen der Produktionsanlage und/oder zum Erstellen eines Anlagenfahrplans zum Durchführen eines Produktionsprozesses in der Produktionsanlage, wobei ein Einfluss von Lastwechseln auf die Produktionsanlage als Randbedingung berücksichtigt wird (24).

Fig. 2

**Beschreibung**

Die Erfindung betrifft ein Verfahren zur Auslegungs- und/oder Produktionsplanung betreffend eine Produktionsanlage, wobei ein Optimierungsproblem in Abhängigkeit von Ersatzmodellen und Randbedingungen formuliert und gelöst wird zum Auslegen der Produktionsanlage und/oder zum Erstellen eines Anlagenfahrplans zum Durchführen eines Produktionsprozesses in der Produktionsanlage.

Stand der Technik

Im Zuge einer Auslegungsplanung kann eine Produktionsanlage während einer Planungsphase zunächst ausgelegt werden, bevor die Prozessanlage gemäß der entsprechenden gewählten Auslegung an einem entsprechenden Standort konstruiert bzw. errichtet und letztendlich in Betrieb genommen wird. Im Zuge dieser Auslegung können Größen der Prozessanlage, beispielsweise die Art und Dimensionen einzelner Elemente und Komponenten der Prozessanlage oder der spezifische Typ verschiedener Komponenten, gewählt werden.

Ferner kann im Zuge einer Produktionsplanung ein Anlagenfahrplan erstellt werden, gemäß welchem der Produktionsprozess in der Produktionsanlage letztendlich durchgeführt wird. In diesem Anlagenfahrplan können Prozessparameter wie beispielsweise Eduktbedarf, Produktionsmengen usw. vorgegeben werden. Ein derartiger Anlagenfahrplan sieht zumeist vor, den Produktionsprozess bezüglich seiner Prozessparameter optimal an gegebene Randbedingungen anzupassen.

Zum Erstellen des Anlagenfahrplans kann im Zuge einer mathematisch gestützten Produktionsplanung eine Optimierung durchgeführt werden. Hierzu wird ein Optimierungsproblem formuliert, wobei ein Lösungsraum $\Omega$, also eine Menge von möglichen Lösungen bzw. Variablen, sowie eine Zielfunktion $f$ vorgegeben werden. Zur Lösung dieses Optimierungsproblem wird ein Satz von Werten der Variablen bzw. Lösungen $\vec{x} \in \Omega$ gesucht, so dass $f(\vec{x})$ ein vorgegebenes Kriterium erfüllt, beispielsweise maximal oder minimal wird. Bei der Produktionsplanung kann zur Lösung des Optimierungsproblems beispielsweise eine Zielfunktion so definiert werden, dass Betriebskosten (engl. "operational expenditure", kurz OPEX) der Produktionsanlage möglichst minimiert werden.

Oftmals können auch Rand- bzw. Nebenbedingungen vorgegeben sein, wobei zulässige Lösungen $\vec{x}$ diese vorgegebenen Randbedingungen erfüllen müssen.

Derartige Randbedingungen können in der Form von Gleichungen oder Ungleichungen vorgegeben sein oder eine explizite Menge beschreiben, z.B. nur ganzzahlige Werte von Prozessparametern. Die Menge aller Lösungen, welche alle vorgegebenen Randbedingungen erfüllen, wird als zulässige Menge bezeichnet.

Bei einer sog. linearen und ganzzahligen Optimierung (engl. "mixed integer linear programming", MILP) ist die Zielfunktion linear vorgegeben und die Nebenbedingungen sind durch ein System linearer Gleichungen und Ungleichungen darstellbar, die zusätzlich ganzzahlige Entscheidungen beinhalten. Bei einer nichtlinearen Optimierung (engl. "mixed integer nonlinear programming", MINLP) weisen die Zielfunktion und/oder die Randbedingungen hingegen nichtlineare Eigenschaften auf.

Die Verwendung derartiger MILP und MINLP Optimierungen für die Produktionsplanung wird beispielsweise in den Artikeln "Mitra et al., Optimal production planning under time-sensitive electricity prices for continuous power-intensive processes. Comput. Chem. Eng., 2012, 38" und "Zhang et al., Planning and Scheduling for Industrial Demand Side Management: Advances and Challenges. Alternative Energy Sources and Technologies. Springer, 2016, 383-414" beschrieben.

Offenbarung der Erfindung

Ausgehend von diesem Stand der Technik wird ein Verfahren zur Auslegungs- und/oder Produktionsplanung betreffend eine Produktionsanlage mit den Merkmalen des Patentanspruchs 1 vorgeschlagen. Vorteilhafte Ausführungsformen sind jeweils Gegenstand der Unteransprüche sowie der nachfolgenden Beschreibung.

Im Rahmen des Verfahrens wird ein Optimierungsproblem in Abhängigkeit von Ersatzmodellen und Randbedingungen formuliert und gelöst, das zum Auslegen der Produktionsanlage (Auslegungsplanung) und/oder zum Erstellen eines Anlagenfahrplans zum Durchführen eines Produktionsprozesses in der Produktionsanlage (Produktionsplanung) genutzt werden kann. Erfindungsgemäß wird ein Einfluss von Lastwechseln auf die Produktionsanlage als Randbedingung berücksichtigt. Insbesondere wird ein Einfluss von Lastwechseln auf eine Zielfunktion der Produktionsanlage als Randbedingung berücksichtigt.

Zweckmäßigerweise wird die Planung unter Berücksichtigung der voraussichtlichen Lastwechsel durchgeführt, welche die Produktionsanlage während eines vorgegebenen Zeitintervalls durchlaufen wird bzw. würde, insbesondere während der gesamten voraussichtlichen Lebensdauer der Produktionsanlage. Insbesondere werden einzelne Komponenten der Produktionsanlage bzw. die Produktionsanlage im Zuge der Auslegungsplanung dabei derartig ausgelegt, dass die erhöhten Belastungen aufgrund der voraussichtlich durchzuführenden Lastwechsel zu keiner Reduzierung deren erwarteter Lebensdauer führen. Durch eine gezielte Anpassung des Anlagenfahrplans zum Betreiben der Produktionsanlage im Rahmen der Produktionsplanung wird das Auftreten erhöhter Belastungen gering gehalten oder gar vermieden.

Unter einem Lastwechsel sei in diesem Zusammenhang insbesondere zu verstehen, dass die Produktionsanlage zunächst in einem ersten Lastzustand betrieben wird und von diesem ersten Lastzustand in einen zweiten Lastzustand wechselt, wobei die Produktionsanlage bzw. einzelne Komponenten der Produktionsanlage in diesen beiden Lastzuständen auf unterschiedliche Weise betrieben werden, unterschiedlich belastet werden bzw. unterschiedlichen Kräften ausgesetzt sind. Insbesondere bezeichnet ein Lastwechsel einen Vorgang innerhalb der Produktionsanlage, welcher den Ausstoß an Produkten (insb. Qualität und Quantität) und/oder den Bedarf an Betriebsmitteln verändert. Durch derartige Lastwechsel sind Komponenten der Produktionsanlage somit Wechselbelastungen ausgesetzt.

In einem sog. statischen Anlagenbetrieb sind zumeist keine oder zumindest kaum derartige Lastwechsel vorgesehen und die Produktionsanlage wird stets in demselben oder zumindest im Wesentlichen in demselben Lastzustand betrieben. Um den Produktionsprozess möglichst effektiv durchzuführen und an sich ändernde Randbedingungen anzupassen, beispielsweise an sich ändernde Energie- oder Eduktpreise, kann jedoch ein quasi-statischer oder ein dynamischer Anlagenbetrieb vorteilhaft sein, im Zuge dessen die Produktionsanlage in verschiedenen Lastzuständen betrieben werden kann und es zu häufigen Lastwechseln kommen kann. Die Zeitskalen, innerhalb derer eine Änderung der Randbedingungen stattfindet, können dabei im Bereich von Sekunden bis Jahren, vorzugsweise jedoch im Bereich von Minuten bis Tagen liegen. Je nach tatsächlich berücksichtigten Zeitskalen resultiert eine Anforderung an einen quasi-statischen (Abfolge von Gleichgewichtszuständen bei relativ langsamer Verstellung der Anlage, z.B. im Bereich von Stunden bis Tagen) bzw. dynamischen Anlagenbetrieb (Abfolge von Nicht-Gleichgewichts-Zuständen bei relativ schneller Verstellung der Anlage, z.B. im Bereich von Sekunden bis Minuten).

Derartiger quasi-statischer oder dynamischer Anlagenbetrieb hat zur Folge, dass die Produktionsanlage im Ganzen bzw. in Teilen eine erhöhte Anzahl von Lastwechseln in Form von Wechselbelastung erfährt. Diese Wechselbelastungen können mechanischer (z.B. Ermüdung durch Druckwechselbelastung, erhöhter Verschleiß bei bewegten Teilen) und/oder thermo-mechanischer Natur sein (z.B. thermische Spannungen aufgrund von Temperaturwechseln), aber können auch erhöhten Verschleiß bzw. erhöhte Alterung von elektronischen Bauteilen zur Folge haben.

Der Anlagenfahrplan wird insbesondere derart erstellt, dass der Produktionsprozess bezüglich seiner Produktionsmengen optimal an die gegebenen Randbedingungen angepasst wird. Im späteren Betrieb der Produktionsanlage wird der Produktionsprozess demgemäß zeitlich an den ermittelten optimierten Anlagenfahrplan angepasst, was insbesondere weg von einer statischen hin zu einer quasi-statischen bis dynamischen Betriebsweise der Produktionsanlage führt. Die Zeitskalen der Variabilität der Randbedingungen bewegen sich dabei im Bereich von Jahren bis Sekunden, typischerweise jedoch im Bereich von Stunden bis Minuten.

Insbesondere wenn für die Produktionsanlage ein quasi-statischer oder dynamischer Anlagenbetrieb vorgesehen ist, wird im Zuge der Produktionsplanung der Einfluss von Lastwechseln auf die Produktionsanlage bzw. auf deren Komponenten als Randbedingung für die mathematische Optimierung zweckmäßigerweise derart berücksichtigt, dass es durch die voraussichtlich durchzuführenden Lastwechsel möglichst nicht zu wechselbelastungsbedingten Schäden oder Verschleißerscheinungen der Produktionsanlage kommt und der Produktionsprozess über die vorgesehene Lebensdauer der Produktionsanlage trotz häufig durchgeführter Lastwechsel möglichst zuverlässig und effektiv durchgeführt werden kann.

Wenn im Gegensatz dazu im Zuge einer herkömmlichen Anlagenplanung Einflüsse von Lastwechseln nicht berücksichtigt werden und somit keine Auslegung der entsprechenden Produktionsanlage auf voraussichtlich durchzuführenden Lastwechsel hin erfolgt, kann dies zur Folge haben, dass mit dem Überschreiten einer Grenze für Wechselbelastung im späteren Betrieb der Produktionsanlage mit einer erhöhten Wahrscheinlichkeit mit Schäden an Komponenten der Produktionsanlage zu rechnen ist. Dies kann zu finanziellen sowie sicherheitstechnischen Risiken und möglicherweise gar zu einem kompletten Erlöschen der Betriebserlaubnis führen. Durch die Erfindung können derartige finanzielle und sicherheitstechnische Risiken oder das Erlöschen der Betriebserlaubnis aufgrund von Wechselbelastungen zweckmäßigerweise vermieden werden.

Insbesondere ist es vorgesehen, die Produktionsanlage im Zuge einer sog. Laststeuerung (engl. "demand side management", DSM, bzw. engl. "demand side response", DSR) zu betreiben, im Zuge dessen die Nachfrage nach versorgungsnetzgebundenen Dienstleistungen gesteuert werden kann. Beispielsweise kann diese Laststeuerung zur Stabilisierung des elektrischen Netzes beitragen, weshalb derartige Dienstleistungen vergütet werden und so zu zusätzlichen Nebeneinkünften für den Anlagenbetreiber führen können. Ebenso ist es denkbar, die Laststeuerung bezüglich der sog. "Demand Response" durchzuführen, so dass Lastprofile auf Marktanreize hin angepasst werden. "Demand Response" bezeichnet dabei eine kurz- bis mittelfristige, oft auch planbare Veränderung der Verbraucherlast als Reaktion auf Preissignale im Markt oder auf eine Aktivierung im Rahmen einer vertraglichen Leistungsreserve. Im Zuge einer derartigen Laststeuerung kann es somit zu häufigen Lastwechseln der Produktionsanlage kommen, weswegen sich das vorliegende Verfahren besonders zur Planung von bzw. bei Produktionsanlagen anbietet, welche im Zuge einer derartigen Laststeuerung betrieben werden soll.

Insbesondere wird im Rahmen des Verfahrens eine mathematisch gestützte Planung bzw. eine mathematische Optimierung durchgeführt. Zweckmäßigerweise wird das Verhalten der Produktionsanlage direkt oder mit Hilfe eines theoretischen Ersatzmodells zur Formulierung des Optimierungsproblems implementiert. Im Zuge der Formulierung des Optimierungsproblems werden insbesondere ein Lösungsraum bzw. eine Menge von möglichen Lösungen $\vec{x}$ sowie eine Zielfunktion $f$ vorgegeben. Insbesondere werden aus allen Lösungen, welche die vorgegebenen Randbedingungen erfüllen, diejenige bzw. diejenigen Lösungen $\vec{x}_{opt}$ gesucht, so dass die Zielfunktion $f(\vec{x}_{opt})$ ein vorgegebenes Kriterium erfüllt, beispielsweise maximal oder minimal wird.

Als derartige Lösungen der Zielfunktion, welche die Randbedingungen erfüllen, werden insbesondere Variablen bzw. Variablenwerte für das Auslegen und/oder den Anlagenfahrplan gefunden, beispielsweise Größen der Prozessanlage, wie die Dimensionen einzelner Elemente und Komponenten der Prozessanlage oder der spezifische Typ verschiedener Komponenten, und/oder Prozessparameter des Produktionsprozesses wie Eduktbedarf, Produktionsmengen, usw.

Im Rahmen des Verfahrens kann zweckmäßigerweise eine lineare und ganzzahlige Optimierung (engl. "mixed integer linear programming", MILP) durchgeführt werden, wobei die Zielfunktion linear und die Randbedingungen durch ein System linearer Gleichungen und Ungleichungen vorgegeben sind. Ebenso ist es zweckmäßigerweise denkbar, eine nichtlineare Optimierung (engl. "mixed integer non-linear programming", MINLP) durchzuführen, wobei die Zielfunktion und/oder die Randbedingungen nichtlinear sind.

Vorteilhafterweise wird der Einfluss der Lastwechsel auf die Lebensdauer von Komponenten der Produktionsanlage und/oder auf die Zielfunktion berücksichtigt. Insbesondere kann als Randbedingung vorgegeben werden, negativen, schädlichen Einfluss durch Lastwechsel auf die Produktionsanlage bzw. deren Komponenten zu minimieren und somit die aus Schadensfällen resultierenden Opportunitäts- bzw. Betriebskosten möglichst gering zu halten. Demgemäß werden im Zuge der Planung Variablen bzw. Variablenwerte für das Auslegen und/oder den Anlagenfahrplan zweckmäßigerweise derart bestimmt, dass die entsprechende Produktionsanlage langfristig ohne Schäden durch Wechselbelastung betrieben werden kann.

Vorzugsweise wird die Produktionsanlage derart ausgelegt und/oder der Anlagenfahrplan wird bevorzugt derart erstellt, dass eine geforderte Lebensdauer der Produktionsanlage und/oder die Zielfunktion ein vorgegebenes Kriterium erfüllt. Neben dem Einfluss durch Lastwechsel können dabei als Randbedingungen ferner beispielsweise Vorhersagen über kurz- oder mittelfristige Entwicklungen am Energie- und Produktmarkt, Verfügbarkeit von Ressourcen (z.B. Transportmittel wie LKW) sowie absehbare produktionsrelevante Ereignisse (z.B. Wartungsarbeiten) berücksichtigt werden.

Vorteilhafterweise umfasst das durch die Zielfunktion zu erfüllende Kriterium eine Minimierung von Betriebskosten (engl. "operational expenditure", kurz OPEX), Opportunitätskosten, Gesamtkosten des Betriebs und/oder eines Bedarfs einer Ressource der Produktionsanlage. Durch Erfüllung dieses Kriteriums durch die Zielfunktion werden Kosten somit möglichst gering gehalten.

Gemäß einer bevorzugten Ausführungsform wird für die Formulierung und/oder Lösung des Optimierungsproblems eine Vorgeschichte wenigstens einer Komponente der Produktionsanlage berücksichtigt. Alternativ oder zusätzlich wird eine verbleibende Lebensdauer wenigstens einer Komponente berücksichtigt. Beispielsweise können als derartige Vorgeschichte die bisherigen Arbeitsstunden und/oder der bisherige Verschleiß bzw. die bisherige Alterung der jeweiligen Komponenten und/oder die Anzahl und Art der bisher durchlaufenen Startvorgänge berücksichtigt werden. Zweckmäßigerweise kann die verbleibende Lebensdauer aus der bisherigen Vorgeschichte anhand eines Lebensdauermodells abgeleitet werden. Bei dem Lebensdauermodell kann es sich beispielsweise um einen einfachen Vergleich von durchlaufenen zu den zulässigen Wechselzyklen oder aber auch um eine komplexe mathematische Auswertung der Historie der lokalen Betriebsbedingungen handeln. Die Auswertung des Lebensdauermodells kann dabei sowohl im Umfeld des Ersatzmodells der Anlage integriert als auch in einer externen Auswerteeinheit geschehen. Zweckmäßigerweise kann die verbleibende Lebensdauer einer Komponente aus einem vorhergehenden Lauf einer Produktionsoptimierung übergeben und übernommen werden. Insbesondere können sog. intelligente Komponenten (engl. "smart device") unter Berücksichtigung ihrer Vorgeschichte mit Hilfe einer dedizierten Auswerteeinheit eigenständig Lastspitzen vermeiden und somit insbesondere eigenständig Lastwechselbelastungen reduzieren. Die in der Vorgeschichte entstandenen sowie die gemäß der Produktionsplanung entstehenden Belastungen können zweckmäßigerweise von der jeweiligen Komponente aus der Historie der erfassten und der künftig zu erwartenden Betriebsdaten über ein parallel berechnendes Lebensdauermodell (mechanistisch, statistisch oder hybrid) generiert, rekonstruiert bzw. ermittelt und beispielsweise an die Produktionsplanung weitergegeben werden.

Vorzugsweise werden zum Auslegen der Produktionsanlage Prozessanlagengrößen in Abhängigkeit von dem Einfluss der Lastwechsel abgeleitet und/oder bewertet. Unter derartigen Prozessanlagengrößen seien in diesem Zusammenhang insbesondere konstruktive Aspekte wie Eigenschaften bzw. Größen der Produktionsanlage zu verstehen. Beispielsweise können Simulationen der Prozessanlage jeweils mit unterschiedlich ausgelegten Komponenten bzw. Prozessanlagen durchgeführt werden und basierend auf den Simulationsergebnissen können diejenigen Komponenten bzw. Prozessanlagentypen dahingehend bewertet und entsprechend ausgewählt werden, bei welchen der Einfluss der Lastwechsel zu den geringsten Beeinträchtigungen führen und somit eine möglichst lange Lebensdauer der Produktionsanlage bzw. deren Komponenten bei möglichst geringen Betriebskosten erreicht wird.

Bevorzugt werden als Prozessanlagengrößen eine oder mehrere Auslegungsgrößen von Komponenten der Produktionsanlage abgeleitet und/oder bewertet. Als Auslegungsgrößen sind dabei beispielsweise konkrete Dimensionen einzelner Komponenten der Prozessanlage oder der spezifische Typ verschiedener Komponenten zu verstehen. Vorzugsweise werden eine oder mehrere der folgenden Auslegungsgrößen abgeleitet und/oder bewertet: eine Baureihe, ein Typ, eine Nenngröße, ein Volumen, ein verwendetes Material, eine Wandstärke, eine Rohrleitungsführung, eine Stutzenanordnung, eine interne Ausführung einer Kolonne, eines Abscheiders oder eines Wärmeübertragers, ein Maschinenelement, ein Regelungssystem. Beispielsweise können so der Einfluss verschiedener Verdichtertypen (über Kennfelder) und/oder der Einfluss von Rohrleitungsdurchmessern (über Druckverluste) auf die zu erwartende Performanz der Prozessanlage unter den aus einer Produktionsplanung abgeleiteten Lastzuständen evaluiert werden.

Gemäß einer bevorzugten Ausführungsform werden in dem Anlagenfahrplan zum Durchführen eines Produktionsprozesses eine Anzahl und/oder eine Geschwindigkeit spezifischer Lastwechsel über die Lebensdauer einer spezifischen Komponente der Prozessanlage begrenzt, insbesondere kumuliert begrenzt. Insbesondere wird somit für eine spezifische Komponente begrenzt, wie viele Lastwechsel einer bestimmten Art diese über ihre Lebensdauer maximal durchführen wird, insbesondere um eine gewünschte Lebensdauer der Komponente zu gewährleisten und lastwechselbedingten Verschleiß der Komponente über ihre Lebensdauer zu minimieren bzw. ihre individuelle Lebensdauer im Rahmen der avisierten Lebensdauer der Produktionsanlage optimal auszunutzen.

Vorteilhafterweise wird eine absolute Anzahl von Druckwechseln begrenzt, insbesondere in Druckbehältern und/oder drucktragenden Teilen wie dem Gehäuse einer Maschine, einer Rohrleitung, einer Prozesskomponente wie einer Kolonne oder einem Phasenabscheider, oder einem Wärmeübertrager, insbesondere einem Aluminium-Plattenwärmeübertrager. Alternativ oder zusätzlich wird vorteilhafterweise eine absolute Anzahl von Schaltvorgängen und/oder Änderungen eines Betriebszustands begrenzt, insbesondere eines bewegten Teils (z.B. eines Maschinenelements wie Lager, Zahnrad, usw.) und/oder einer elektronischen Schaltvorrichtung (z.B. eines Relais, Schalters, usw.).

Gemäß einer vorteilhaften Ausführungsform wird in dem Anlagenfahrplan zum Durchführen eines Produktionsprozesses eine Anzahl und/oder eine Geschwindigkeit spezifischer Lastwechsel innerhalb eines spezifischen Zeitintervalls begrenzt, insbesondere inkrementell begrenzt. Beispielsweise kann dieses spezifische Zeitintervall eine Stunde, einen Tag, eine Woche, einen Monat, oder ein Jahr betragen.

Vorzugsweise wird eine Anzahl und/oder eine Geschwindigkeit von Anlaufvorgängen und/oder Stoppvorgängen und/oder Schaltvorgängen und/oder Änderungen eines Betriebszustands einer speziellen Komponente der Prozessanlage innerhalb des spezifischen Zeitintervalls begrenzt, beispielsweise einer Maschine (z.B. eines Verdichters, eines Expanders, einer Pumpe, usw.), eines Getriebes, eines Verbrennungsmotors, einer Gasturbine, einer Dampfturbine, eines Elektromotors, eines elektrischen Generators, eines Frequenzumrichters, eines Thyristors, eines Sanftstarters, usw. Derartige zeitspezifische Begrenzungen von Lastwechseln sind beispielsweise in Form der Begrenzung der Häufigkeit des Starts eines Elektromotors innerhalb eines Zeitintervalls gegeben um eine Überhitzung der Windungen zu vermeiden.

Gemäß einer bevorzugten Ausführungsform wird in dem Anlagenfahrplan zum Durchführen des Produktionsprozesses eine Anzahl und/oder eine Geschwindigkeit spezifischer Lastwechsel und/oder eine Verweilzeit in spezifischen Lastzuständen über die Lebensdauer einer spezifischen Komponente der Prozessanlage in Abhängigkeit von Produktionsgrößen begrenzt. Insbesondere werden die Anzahl und/oder die Geschwindigkeit spezifischer Lastwechsel und/oder die Verweilzeit in spezifischen Lastzuständen somit spezifisch kumuliert begrenzt. Insbesondere kann somit auf veränderte Produktionsgrößen reagiert werden, vor allem wenn sich diese Produktionsgrößen im Laufe der Lebensdauer der spezifischen Komponente aufgrund von Lastwechseln bzw. aufgrund von Effekten der Lastwechsel auf die spezifische Komponente verändern.

Als Produktionsgröße wird vorzugsweise eine Qualität, insbesondere eine kontinuierliche Degeneration der Qualität, von Edukten und/oder Zwischenprodukten und/oder Endprodukten berücksichtigt. Vorzugsweise werden die Anzahl und/oder die Geschwindigkeit der spezifischen Lastwechsel in Abhängigkeit von der Qualität von Edukten und/oder Zwischenprodukten und/oder Endprodukten begrenzt, insbesondere mit zunehmender Verweilzeit in spezifischen Lastzuständen. Derartige kontinuierliche Degeneration der Qualität ist beispielsweise durch das Abkühlen und Erstarren einer Schmelze in einer Schmelzwanne, durch die Entstehung von unerwünschten Akkumulation von Nebenprodukten chemischer Reaktionen bei mangelnder Durchströmung eines Reaktors oder durch die Anreicherung von schwersiedenden Verunreinigungen beim Abdampfen einer kryogenen Flüssigkeit aus einem Tank gegeben.

Alternativ oder zusätzlich wird als Produktionsgröße bevorzugt ein Lebensdauerverbrauch einer spezifischen Komponente berücksichtigt. Bevorzugt werden die Anzahl und/oder die Geschwindigkeit der spezifischen Lastwechsel und/oder die Verweilzeit in einem spezifischen Lastzustand in Abhängigkeit von dem jeweiligen spezifischen Lebensdauerverbrauch, begrenzt.

Beispielsweise ist ein derartiger Zusammenhang durch eine überproportional zunehmende thermo-mechanische Belastung von Wärmeübertragern beim Wiederanfahren nach zunehmender Stillstandsdauer gegeben.

Vorteilhafterweise beziehen sich die spezifischen Lastwechsel auf Wechsel zwischen Zuständen unterschiedlichen Durchströmungsgrads. Die spezifischen Lastzustände beziehen sich vorzugsweise auf Betriebszustände partieller und/oder erliegender Durchströmung der Komponente. Die Komponente bezieht sich bevorzugt auf Wärmeübertrager vorzugsweise auf Mehrstromwärmeübertrager und insbesondere auf Aluminium-Plattenwärmeübertrager.

Vorzugsweise stellt der Lebensdauerverbrauch der Komponente sich teilweise oder komplett als linearer und/oder überproportionaler insbesondere näherungsweise potenzieller Zusammenhang zur Anzahl und/oder Geschwindigkeit spezifischer Lastwechsel und/oder der Verweilzeit in spezifischen Lastzuständen dar.

Bevorzugt stellt der Lebensdauerverbrauch der Komponente sich bei einer Verweilzeit von weniger als 6h Stunden im Bereich 0 bis 0,2% und/oder bei einer Verweilzeit von 6 bis 12h Stunden im Bereich von 0,001% bis 2% und/oder bei einer Verweilzeit von 12 bis 24h Stunden im Bereich von 0,01% bis 20% und/oder bei einer Verweilzeit von 24 bis 48h Stunden im Bereich von 0,1% bis 100% je Vorgang dar.

Vorteilhafterweise werden in dem ermittelten Anlagenfahrplan die Anzahl und/oder die Geschwindigkeit spezifischer Lastwechsel und/oder die Verweilzeit in spezifischen Lastzuständen für die Anlage und/oder spezifischen Komponente zeitlich aufgelöst und/oder in einem Zeitintervall integral vorgegeben.

Vorzugsweise wird der Einfluss der Lastwechsel auf die Produktionsanlage durch Experimente und/oder Betriebserfahrung und/oder Anlagendaten und/oder Simulationen und/oder Herstellerangaben und/oder sog. intelligente Komponenten (engl. "smart device") bestimmt. Insbesondere erfolgt somit eine Quantifizierung und Modellierung des lastwechselbedingten Verschleißes bzw. Lebensdauerverbrauchs von Komponenten der Produktionsanlage. Als Simulationen können insbesondere statische/dynamische Simulationen, vor allem jedoch thermo-mechanische Festigkeitssimulationen, mit Hilfe der Finite-Elemente-Methode (FEM) bzw. Finite-Volumen-Methode (FVM) durchgeführt werden. Ebenfalls ist zweckmäßigerweise eine Verwendung von Ersatzmodellen (z.B. statistischen Ersatzmodellen) bzw. hybriden Modellen möglich.

Die Erfindung eignet sich in besonders vorteilhafter Weise für eine verfahrenstechnische Anlage, insbesondere für eine Anlage zur Trennung und/oder Reinigung und/oder Verflüssigung von Gasen. Der Produktionsprozess ist demgemäß allgemein insbesondere eine Fluidzerlegung und/oder eine Gasverflüssigung und/oder deren Kombination. Besonders vorteilhaft ist die Produktionsanlage dabei als eine Luftzerlegungsanlage oder als eine Erdgasverflüssigungsanlage ausgebildet, insbesondere eine Anlage zur Gewinnung und/oder Trennung und/oder Reinigung und/oder Verflüssigung von Luft und/oder Stickstoff und/oder Sauerstoff und/oder Argon und/oder Helium und/oder Wasserstoff und/oder Erdgas und/oder Methan und/oder Kohlenmonoxid und/oder Ethylen und/oder Kohlendioxid sowie deren Mischungen.

Eine Luftzerlegungsanlage kann als Komponenten insbesondere Destillationssäulensysteme aufweisen, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssiger Sauerstoff, LOX, gasförmiger Sauerstoff, GOX, flüssiger Stickstoff, LIN und/oder gasförmiger Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein. Destillationssäulen werden auch als Destillationskolonnen bezeichnet. Im Rahmen des Verfahrens können zweckmäßigerweise einzelne oder insbesondere alle derartigen Komponenten der Luftzerlegungsanlage sowie die darin stattfindenden Teilprozesse ausgelegt werden und ein entsprechender Anlagenfahrplan erstellt werden. Beispielsweise kann im Rahmen der Erfindung eine Auslegung einer Destillationskolonne einer Fluidzerlegungsanlage durchgeführt werden und ein Anlagenfahrplan entsprechend erstellt werden. Ferner kann bei einem festen Anlagendesign im Rahmen der Erfindung der Lebensdauerverbrauch des Kolonnensystems überwacht und bei der Erstellung des Anlagenfahrplans entsprechend berücksichtigt werden.

Eine erfindungsgemäße Recheneinheit ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) bzw. die Datenverarbeitung in einer Rechnerwolke (engl. "cloud computing") ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1    zeigt schematisch eine Produktionsanlage, für welche im Zuge einer bevorzugten Ausführungsform eines erfindungsgemäßen Verfahrens eine Auslegungs- und/oder Produktionsplanung durchgeführt werden kann.

Figur 2    zeigt schematisch eine bevorzugte Ausführungsform eines erfindungsgemäßen Verfahrens als ein Blockdiagramm.

Ausführliche Beschreibung der Zeichnungen

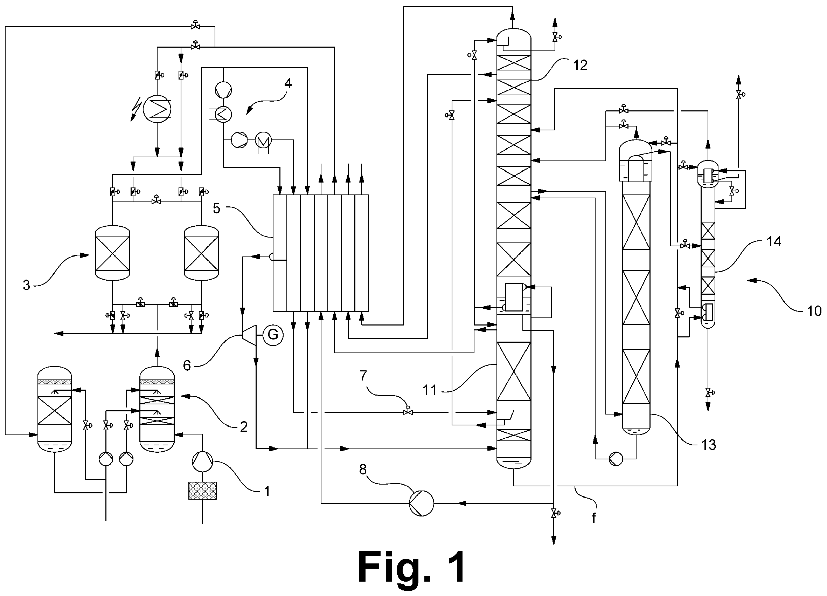

In Figur 1 ist eine Produktionsanlage in Form einer Luftzerlegungsanlage schematisch dargestellt, für welche im Zuge einer bevorzugten Ausführungsform eines erfindungsgemäßen Verfahrens eine Auslegungsplanung, im Zuge welcher die Produktionsanlage ausgelegt wird, und/oder eine Produktionsplanung, im Zuge welcher ein Anlagenfahrplan zum Durchführen eines Produktionsprozesses, in diesem Beispiel einer Luftzerlegung, erstellt wird, durchgeführt werden kann.

Die Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmeübertrager 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

In der Luftzerlegungsanlage wird im Zuge einer Luftzerlegung ein Einsatzluftstrom mittels des Hauptluftverdichters 1 über ein nicht bezeichnetes Filterelement angesaugt und verdichtet. Der verdichtete Einsatzluftstrom wird der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in zwei Teilströme aufgeteilt. Einer der Teilströme wird auf dem Druckniveau des Einsatzluftstroms in dem Hauptwärmeübertrager 5 vollständig abgekühlt. Der andere Teilstrom wird in der Nachverdichteranordnung 4 nachverdichtet und ebenfalls in dem Hauptwärmeübertrager 5 abgekühlt, jedoch nur auf ein Zwischentemperaturniveau. Ein Teil dieses Stroms, der sogenannte Turbinenstrom, wird nach der Abkühlung auf das Zwischentemperaturniveau mittels der Entspannungsturbine 6 auf das Druckniveau des vollständig abgekühlten Teilstroms entspannt, mit diesem vereinigt, und in die Hochdrucksäule 11 eingespeist.

In der Hochdrucksäule 11 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 11 abgezogen, teilweise als Heizmedium in einem Sumpfverdampfer der Reinargonsäule 14 verwendet und jeweils in definierten Anteilen in einen Kopfkondensator der Reinargonsäule 14, einen Kopfkondensator der Rohargonsäule 13 sowie die Niederdrucksäule 12 eingespeist. In den Verdampfungsräumen der Kopfkondensatoren der Rohargonsäule 13 und der Reinargonsäule 14 verdampfendes Fluid wird ebenfalls in die Niederdrucksäule 12 überführt.

Vom Kopf der Hochdrucksäule 11 wird das gasförmige stickstoffreiche Kopfprodukt abgezogen, in einem Hauptkondensator, der eine wärmetauschende Verbindung zwischen der Hochdrucksäule 11 und der Niederdrucksäule 12 herstellt, verflüssigt, und in Anteilen als Rücklauf auf die Hochdrucksäule 11 aufgegeben und in die Niederdrucksäule 12 entspannt.

In der Niederdrucksäule 12 werden eine sauerstoffreiche flüssige Sumpffraktion sowie eine stickstoffreiche gasförmige Kopffraktion gebildet. Erstere wird teilweise in der Pumpe 8 flüssig auf Druck gebracht, in dem Hauptwärmeübertrager 5 erwärmt, und als Produkt bereitgestellt. Aus einer Flüssigkeitsrückhalteeinrichtung am Kopf der Niederdrucksäule 12 wird ein flüssiger stickstoffreicher Strom abgezogen und als Flüssigstickstoffprodukt aus der Luftzerlegungsanlage ausgeführt werden. Ein vom Kopf der Niederdrucksäule 12 abgezogener gasförmiger stickstoffreicher Strom wird durch den Hauptwärmeübertrager 5 geführt und als Stickstoffprodukt auf dem Druck der Niederdrucksäule 12 bereitgestellt. Aus der Niederdrucksäule 12 wird ferner ein Strom aus einem oberen Bereich abgezogen und nach Erwärmung in dem Hauptwärmeübertrager 5 als sogenannter Unreinstickstoff in der Vorkühleinrichtung 2 bzw. nach einer Aufheizung mittels eines elektrischen Heizers in dem Reinigungssystem 3 verwendet.

Insgesamt wird der Kolonne bzw. der Niederdrucksäule 12 im Zuge der Luftzerlegung Luft (AIR) zugeführt und zumindest Sauerstoff und Stickstoff jeweils gasförmig (GOX, GAN) und/oder flüssig (LOX, LIN) entnommen. Weiterhin wird üblicherweise Unreinstickstoff (UN2) abgezogen und gewünschtenfalls Edelgase wie Argon usw.

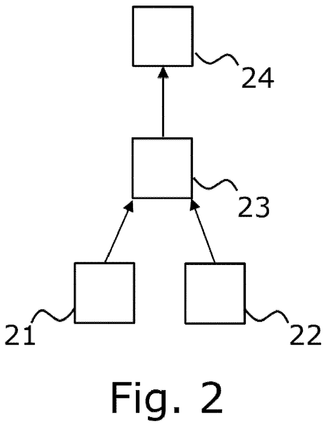

In Figur 2 ist schematisch eine bevorzugte Ausführungsform eines erfindungsgemäßen Verfahrens als ein Blockdiagramm dargestellt, im Zuge dessen im vorliegenden Beispiel eine Auslegungs- und Produktionsplanung für eine Luftzerlegungsanlage durchgeführt wird, wie sie in Figur 1 dargestellt ist.

Im Zuge der Auslegungsplanung soll beispielsweise eine geeignete Auslegung für alle in Figur 1 dargestellten Komponenten (den Hauptluftverdichter 1, den Nachverdichteranordnung 4, den Hauptwärmeübertrager 5, das Rektifikationssystem 11 + 12, ...) gefunden werden, insbesondere welcher spezielle Typ und welche spezielle Baureihe dieser Komponenten verwendet werden soll. Ferner soll im Zuge der Produktionsplanung ein Anlagenfahrplan erstellt werden, gemäß welchem in der Luftzerlegungsanlage Sauerstoff, Stickstoff und/oder Argon in gasförmiger und/oder flüssiger Form als Produkte hergestellt werden sollen.

Im Folgenden wird zunächst ein allgemeineres Beispiel für eine bevorzugte Ausführungsform des erfindungsgemäßen Verfahrens gegeben und anschließend ein spezielleres Beispiel in Bezug auf die in Figur 1 gezeigte Produktionsanlage.

In einem Schritt 21 wird ein Ersatzmodell der Prozessanlage erstellt. Unter dem Begriff Ersatzmodell sei in diesem Zusammenhang insbesondere ein Satz an mathematischen Gleichungen zu verstehen, die das reale statische und ggf. auch dynamische Verhalten und insb. die Performanz einer Anlage bzw. deren Komponenten in einer bestimmten Detailtiefe und/oder einem bestimmten Betriebsbereich im Rahmen einer Simulation wiedergeben. Die Detailtiefe des Ersatzmodells kann, je nach Einsatzzweck, von der individuellen Beschreibung und Verknüpfung von Anlagenkomponenten auf Apparateebene (z.B. Rohrleitungen, Regelventilen, Verdichtern, Turbinen, Kolonnen, Wärmeübertragern, Abscheider, Tanks), über die Beschreibung und Verknüpfung von kompletten Untereinheiten des Prozesses sog. Prozesseinheiten (engl. "process unit", z.B. Prozesseinheit zur Vorreinigung, Prozesseinheit zur Kälteproduktion) bis hin zur integralen Beschreibung der kompletten Prozessanlage reichen. Ein solches Ersatzmodell kann beispielsweise (a) als gleichungsbasiertes Modell auf Basis von diskreten mathematischen Formeln zur Beschreibung der physikalischen und chemischen Zusammenhänge innerhalb der Anlage aufgebaut sein (z.B. analog einer klassischen Prozesssimulation aus Formulierung der Erhaltungs- und Transportgleichungen für Masse, Spezies, Energie und Impuls, Gleichungen zur Beschreibung der thermodynamischen Stoffeigenschaften sowie den Gleichgewichtsbeziehungen chemischer Reaktionen) oder (b) auch als datenbasiertes Modell aus korrelativer und/oder empirischer Verknüpfung/Interpolation von Betriebsdaten aus einer realen Anlage bzw. von Daten aus Simulation mit erstgenanntem Modell stammen (z.B. durch polynomiale Regression, lineare Interpolation oder einem neuronalen Netzwerk) oder (c) auch als Kombination der beiden zuvor genannten Modellklassen (a) und (b) (sog. Grey-Box Modell oder Hybridmodell).

Im Schritt 22 werden Randbedingungen formuliert, welche der Abbildung des Umfelds und der Begrenzungen der zu simulierenden Anlage aus Schritt 21 dienen. Diese Randbedingungen beinhalten beispielweise die Beschreibung (d) des Marktumfelds für Edukte, Produkte und Betriebshilfsmittel (z.B. Kundenbedarf an flüssigem Sauerstoff, Energiepreis am Spotmarkt) und/oder (e) der Umgebungsbedingungen (z.B. Tag-Nacht-Verlauf der Umgebungstemperatur) und/oder (f) Rahmenbedingung aus dem Betriebsablauf (z.B. nur ein Lastwechsel pro Arbeitsschicht) und/oder (g) der technischen Begrenzungen von Bauteilen und nicht materiellen Elementen der Anlage (z.B. Mindestdurchsatz durch einen Apparat, Stabilitätsgrenze eines Regelkonzepts).

Erfindungsgemäß wird als derartige Randbedingung ein Einfluss von Lastwechseln auf die Produktionsanlage berücksichtigt. Zu diesem Zweck beinhalten die Randbedingungen insbesondere eine Beschreibung (h) des Verschleißes, der Alterung bzw. des Lebensdauerverbrauchs von technischen Bauteilen durch Lastwechsel (z.B. mechanischer Anriss eines Druckbehälters nach einer bestimmten Anzahl von Druckwechselbelastungen, Schädigung eines Elektromotors durch Überhitzung nach zu häufigem Starten in Folge).

Die konkreten Werte der einzelnen Randbedingungen können sowohl als konstant, aber auch zeitlich aufgelöst in Form eines Datensatzes oder eines gleichungsbasierten Zusammenhangs beschrieben werden. Die konkrete Formulierung der Randbedingungen geschieht insbesondere über mathematische Gleichungen und Ungleichungen.

In Schritt 23 werden die Informationen aus Schritt 21 und Schritt 22 kombiniert und im Zuge einer Produktionsplanung (engl. "production planning" oder "scheduling") dazu verwendet, den Betrieb der Anlage zu simulieren und einen Anlagenfahrplan für eine bestmögliche, d.h. optimierte Betriebsweise zu ermitteln. Unter bestmöglich versteht sich beispielsweise die Minimierung der Betriebskosten (OPEX) der Prozessanlage. Zu diesem Zweck wird ein Optimierungsproblem formuliert und eine mathematische Optimierung durchgeführt, wobei ein Lösungsraum $\Omega$ als eine Menge von möglichen Lösungen bzw. Variablen und Parametern sowie eine Zielfunktion $f$ definiert werden. Insbesondere können sich diese Lösungen bzw. Variablen auf Kombinationen von variablen Prozessanlagengrößen von Edukten, Produkten, Betriebshilfsmitteln und einzelnen internen Prozessströmen der Prozessanlage beziehen (z.B. Mengenstrom durch einen Verdichter, Inhalt in einem Tank, Produktmengenstrom, Druck und Temperatur am Austritt eines Wärmeübertragers).

Schritt 24 beschreibt die Nutzung des in Schritt 23 ermittelten Anlagenfahrplans insbesondere unter Einhaltung der Randbedingungen aus Schritt 22 Unterpunkt (h) betreffend den Einfluss von Lastwechseln auf die Produktionsanlage.

Die Nutzung 24 sieht (i) die Umsetzung des optimierten Anlagenfahrplans in den Betrieb der Anlage vor, wobei in diesem Fall beispielsweise minimale Betriebskosten bei gleichzeitiger Vermeidung von kurz- und langfristigem Produktionsausfall respektive Opportunitätskosten durch Schäden an Anlagenbauteilen erreicht werden können. Eine weitere Möglichkeit der Nutzung stellt (j) die Auswertung des optimierten Anlagenfahrplans zur Verbesserung der Auslegung der Prozessanlage vor. Hier findet insb. eine Auswertung des prädizierten Anlagenfahrplans im Hinblick auf den erreichten Wert der Zielfunktion $f$ (z.B. Höhe der zu erwartenden Energiekosten), der tatsächlichen Ausnutzung der gesetzten Randbedingungen (z.B. wurde die zulässige Lastwechselgeschwindigkeit ausgenutzt?), der Häufigkeit der genutzten Betriebszustände (wie häufig wird ein bestimmter Durchsatz durch einen Apparat gefahren?) und insb. des akkumulierten Verschleißes bzw. des Lebensdauerverbrauchs von Komponenten (z.B. Anzahl aufgetretener Druckwechselzyklen) zur Verbesserung der Auslegung einzelner Anlagenkomponenten und/oder zur ab-initio-Bewertung von technischen Auslegungsoptionen der Prozessanlage dar.

Im Folgenden wird nun ein spezielleres Beispiel für eine bevorzugte Ausführungsform des erfindungsgemäßen Verfahrens gegeben in Bezug auf die in Figur 1 gezeigte Produktionsanlage.

Als Anwendungsbeispiel für Schritt 21 im Rahmen von Figur 1 wird die Durchführung von Prozesssimulationen zur Abbildung des technisch darstellbaren Betriebskennfelds einer Luftzerlegungsanlage angeführt. Nach der initialen Auslegung von allen Prozesskomponenten auf einen im Vorfeld festgelegten Auslegungsfall (engl. "design case") werden konkrete technische Eigenschaften der gewählten Komponenten sowie insb. Informationen zu deren individuellen Betriebsgrenzen und Verhalten bei Laständerung in der Prozesssimulation hinterlegt. Dabei handelt es sich z.B. um Kennfelder des Hauptluftverdichters 1, der Nachverdichteranordnung 4 und der Entspannungsturbine 6, die den Energiebedarf der Maschinen in Abhängigkeit von Durchsätzen, Eintrittstemperaturen, Prozessdrücken und der Kühlwassertemperatur korrelieren und/oder auch um Korrelationen, welche den Wärmeübergang und den Druckverlust in Wärmeübertrager 5 in Abhängigkeit der Strömungsgeschwindigkeit anhand des Durchsatzes abbilden. Das auf diese Weise erzeugte Nachrechnungsmodell der Prozessanlage (engl. "rating model") kann nun entweder direkt in Schritt 23 eingesetzt oder zur Erzeugung von Performanzdaten (z.B. Datensätze mit elektrischem Energiebedarf der Verdichter zur Erzeugung einer bestimmten Menge flüssigen Sauerstoffs und Stickstoffs in der gegebenen Anlage) als Eingangsgröße für ein datenbasiertes Model gemäß Schritt 21 Unterpunkt (b) genutzt werden.

Als Anwendungsbeispiel für Schritt 22 im Rahmen von Figur 1 wird die Vorgabe der marktgetriebenen Randbedingungen in Form von Abnahmeprofilen für flüssigen Sauerstoff und Stickstoff sowie der Spotmarktpreis elektrischer Energie in täglicher, wöchentlicher und saisonaler Schwankung (z.B. verringerter Produktbedarf in den Nachtstunden, hoher Energiepreis in den Mittagstunden) angeführt. Zudem wird der tägliche Verlauf der Umgebungs- und Kühlwassertemperatur insb. als Randbedingung auf das in Schritt 21 integrierte Kennfeld des Hauptluftverdichters 1 und der Nachverdichteranordnung 4 vorgegeben. Aufgrund der reduzierten Personalverfügbarkeit am Wochenende wird die Vorgabe gemacht, dass in diesem Zeitraum maximal zwei Lastwechsel der Anlage je Tag gefahren werden dürfen. Um die Reinheit des Produkts aus der Rohargonkolonne 13 gewährleisten zu können, darf die Lastwechselgeschwindigkeit der Luftzerlegungsanlage mit dem gewählten PIDbasierten Regelkonzept (Proportional-Integral-Differential Regler) beispielsweise maximal 2%/min betragen, was bedeutet, dass sich die Ansaugmenge des Hauptluftverdichters 1 um maximal diesen Betrag zeitlich ändern darf.

Als Beispiele für die gemäß einer bevorzugten Ausführungsform der Erfindung formulierten verschleiß-bzw. lebensdauerrelevanten Randbedingungen wird angeführt, dass Druckbehälter wie z.B. das Gehäuse der Nachverdichteranordnung 4 oder der Mantel der Hochdrucksäule 11 sowie Rohrleitungen nur eine Freigabe für beispielsweise 10 000 Druckwechselzyklen (= 0,01% Lebensdauerverbrauch je Vorgang) innerhalb einer avisieren Lebensdauer von typischerweise 25 Jahren erfahren dürfen, um ein mechanisches Versagen durch Materialermüdung zu vermeiden.

Aufgrund der während Startvorgängen auftretenden hohen thermischen Belastungen der elektrischen Antriebe von Hauptluftverdichter 1 und Nachverdichteranordnung 4 dürfen diese Maschinen beispielsweise maximal zwei Mal täglich, sprich höchstens alle 12 Stunden, gestartet werden.

Während eines kompletten Anlagenstopps kommt es zum graduellen Temperaturausgleich im Hauptwärmeübertrager 5, wobei es zu einer simultanen Abkühlung des warmen Endes und Anwärmung des kalten Endes durch Wärmeleitung im Apparat kommt. Dabei gilt, je länger sich die Luftzerlegungsanlage im Stillstand befindet, desto stärker weicht das Stillstands-Temperaturprofil im Hauptwärmeübertrager 5 vom Temperaturprofil des Apparats im Anlagenbetrieb ab. Im Falle eines Wiederanfahrens der Anlage werden abrupt warme und kalte Prozessströme auf den Apparat aufgegeben, was zum Auftreten hoher lokaler Temperaturgradienten und damit zu Thermospannungen führen kann. Dies hat zur Folge, dass der Hauptwärmeübertrager 5 bei einer bestimmten Wiederanfahrprozedur beispielsweise nach 1h Stillstand nahezu beliebig oft (= kein signifikanter Lebensdauerverbrauch), nach 6h Stillstand zehntausende Male (= Lebensdauerverbrauch im hundertstel-Promillebereich je Vorgang), nach 12h Stillstand tausende Male (= Lebensdauerverbrauch im zehntel Promillebereich je Vorgang) und nach 48h Stillstand wenige zehn Male (= Lebensdauerverbrauch im Prozentbereich je Vorgang) wiederangefahren werden kann, ohne dass es mit hoher Wahrscheinlichkeit zu einer mechanischen Schädigung kommt.

Der belastungs- und betriebsweisenabhängige Lebensdauerverbrauch von Komponenten kann direkt aus Herstellerangaben und/oder Regelwerken abgeleitet oder mit Hilfe von beispielsweise Festigkeitssimulationen auf Basis einer Finite-Elemente-Methode (FEM) ermittelt werden.

Besonders vorteilhaft wird der kumulierte Lebensdauerverbrauch aus der Vergangenheit als auch der bei einer bestimmten Betriebsweise zu erwartende künftige Lebensdauerverbrauch sowie der gewünschten minimalen Lebensdauer von Komponenten als Randbedingung für die Produktionsplanung in Schritt 23 formuliert.

Beispielsweise können in Schritt 23 im Rahmen einer linearen und ganzzahligen Optimierung (MILP) die Zielfunktion $f$ linear vorgegeben werden und ein datenbasiertes Ersatzmodell aus Schritt 21 sowie die Randbedingungen aus Schritt 22 durch ein System linearer Gleichungen und Ungleichungen stückweise linear formuliert werden. Nach Durchführung der MILP-Optimierung (Produktionsplanung) erhält man einen Anlagenfahrplan, welcher hinsichtlich der gewählten Zielfunktion $f$ optimal ist und zugleich den zulässigen Betriebsbereich der Anlage aus Schritt 21 sowie die marktrelevanten, technischen und lebensdauerbedingten Vorgaben aus Schritt 22 einhält. Für das angeführte Beispiel einer Luftzerlegungsanlage können beispielsweise die kumulierten elektrischen Energiekosten oder auch der kumulierte elektrische Energiebedarf als Zielfunktion $f$ definiert werden. Neben dem absoluten Wert der Zielfunktion $f$ liefert die Optimierung einen Satz an optimalen Betriebsparametern $\vec{x}_{opt}$, welche als Basis zum Betrieb der Anlage innerhalb des berücksichtigten Optimierungshorizonts dienen. Dabei kann $\vec{x}_{opt}$ für das Beispiel einer Luftzerlegungsanlage je nach Detailtiefe des Models aus Schritt 21 z.B. den zeitlichen Ablauf der Produktionsmengen der einzelnen Produkte darstellen, konkrete Vorgaben zum Betrieb von einzelnen Anlagenteilen wie z.B. der Ansaugmenge durch den Hauptluftverdichter 1 oder des Drucks am Eintritt der Entspannungsturbine 6 machen und auch einen Beschaffungsplan für elektrische Energie am Spotmarkt definieren.

Als Anwendungsbeispiel für Schritt 24 wird zum einen die Umsetzung des optimalen Satzes an Betriebsparametern $\vec{x}_{opt}$ in einer bereits bestehenden und zu dem Modell aus Schritt 21 korrespondierenden Luftzerlegungsanlage angeführt. Dabei werden die betrieblichen Vorgaben aus $\vec{x}_{opt}$ manuell, teil- oder auch vollautomatisiert umgesetzt und so die Betriebskosten der Luftzerlegungsanlage minimiert, ohne sich dem Risiko von Produktionsausfall durch Schäden an Anlagenkomponenten auszusetzen.

Ferner kann als Anwendungsbeispiel die Nutzung der Produktionsplanung aus Schritt 23 zur Ableitung von Auslegungskriterien und/oder Bewertung von technischen Auslegungsoptionen hinsichtlich ihrer Eignung für einen kostenoptimalen Betrieb in einem zu erwartenden volatilen Marktumfeld geschehen. In Zusammenhang mit dem ersten Aspekt kann eine Optimierung der Anlagenkosten (engl. "captial expenditure", CAPEX) durch z.B. die Anpassung der Druckwechselfestigkeit von Apparaten und Rohrleitungen an die gemäß der Produktionsplanung (im Zuge der Anlagenplanung) zu erwartenden Belastungen stattfinden.

Bezüglich des zweiten Aspekts kann beispielsweise ein Vergleich von technischen Optionen einzelner Anlagenbauteile (z.B. mechanische Ausführungsvarianten des Hauptwärmeübertragers 5 in unterschiedlicher Robustheit, Baugrößen der Nachverdichteranordnung 4 mit unterschiedlichen Kennfeldern) oder sogar komplette Anlagentypen (z.B. verschiedene Prozesstopologien) hinsichtlich ihres Einflusses auf die Gesamtkosten des Betriebs (engl. "total cost of ownership", TCO) im Umfeld der zu erwartenden marktrelevanten Randbedingungen aus Schritt 22 durchgeführt werden.

**Patentansprüche**

1. Verfahren zur Auslegungs- und/oder Produktionsplanung betreffend eine Produktionsanlage, wobei ein Optimierungsproblem (23) in Abhängigkeit von Ersatzmodellen (21) und Randbedingungen (22) formuliert und gelöst wird zum Auslegen der Produktionsanlage und/oder zum Erstellen eines Anlagenfahrplans zum Durchführen eines Produktionsprozesses in der Produktionsanlage (24), und ein Einfluss von Lastwechseln auf die Produktionsanlage als Randbedingung berücksichtigt wird (22).

2. Verfahren nach Anspruch 1, wobei der Einfluss der Lastwechsel auf die Lebensdauer von Komponenten (1, 4, 5) der Produktionsanlage und/oder auf eine Zielfunktion der Produktionsanlage als Randbedingung berücksichtigt wird (22).

3. Verfahren nach Anspruch 2, wobei die Produktionsanlage derart ausgelegt wird und/oder der Anlagenfahrplan derart erstellt wird, dass eine geforderte Lebensdauer der Produktionsanlage bzw. deren Komponenten erreicht wird und/oder die Zielfunktion der Produktionsanlage ein bestimmtes Kriterium erfüllt (23).

4. Verfahren nach Anspruch 2 oder 3, wobei das durch die Zielfunktion zu erfüllende Kriterium eine Minimierung von Betriebskosten, Opportunitätskosten, Gesamtkosten des Betriebs und/oder eines Bedarfs einer Ressource der Produktionsanlage umfasst (23).

5. Verfahren nach einem der vorstehenden Ansprüche, wobei für die Formulierung und/oder Lösung des Optimierungsproblems eine Vorgeschichte wenigstens einer Komponente (1, 4, 5, 6, 8, 11, 12, 13, 14) der Produktionsanlage und/oder eine verbleibende Lebensdauer wenigstens einer Komponente (1, 4, 5, 6, 8, 11, 12, 13, 14) berücksichtigt wird (23).

6. Verfahren nach einem der vorstehenden Ansprüche, wobei zum Auslegen der Produktionsanlage Prozessanlagengrößen in Abhängigkeit von dem Einfluss der Lastwechsel abgeleitet und/oder bewertet werden (24).

7. Verfahren nach Anspruch 6, wobei als Prozessanlagengrößen eine oder mehrere Auslegungsgrößen von Komponenten (1, 4, 5, 6, 8, 11, 12, 13, 14) der Produktionsanlage abgeleitet und/oder bewertet werden (24), insbesondere eine oder mehrere der folgenden Auslegungsgrößen: eine Baureihe, ein Typ, eine Nenngröße, ein Volumen, ein verwendetes Material, eine Wandstärke, eine Rohrleitungsführung, eine Stutzenanordnung, eine interne Ausführung einer Kolonne, eines Abscheiders oder eines Wärmeübertragers, ein Maschinenelement, ein Regelungssystem, eine Betriebsprozedur bzw. Betriebsweise.

8. Verfahren nach einem der vorstehenden Ansprüche, wobei in dem Anlagenfahrplan zum Durchführen des Produktionsprozesses eine Anzahl und/oder eine Geschwindigkeit spezifischer Lastwechsel über die Lebensdauer einer spezifischen Komponente (5) der Prozessanlage begrenzt wird (23).

9. Verfahren nach Anspruch 8, wobei eine absolute Anzahl von Druckwechseln begrenzt wird und/oder eine absolute Anzahl von Schaltvorgängen begrenzt wird und/oder eine absolute Anzahl von Änderungen eines Betriebszustands begrenzt wird (23).

10. Verfahren nach einem der vorstehenden Ansprüche, wobei in dem Anlagenfahrplan zum Durchführen des Produktionsprozesses eine Anzahl und/oder eine Geschwindigkeit spezifischer Lastwechsel innerhalb eines spezifischen Zeitintervalls begrenzt wird (23).

11. Verfahren nach Anspruch 10, wobei eine Anzahl und/oder eine Geschwindigkeit von Anlaufvorgängen und/oder Stoppvorgängen und/oder Schaltvorgängen und/oder Änderungen eines Betriebszustands einer speziellen Komponente (1, 4, 6, 8) der Prozessanlage innerhalb des spezifischen Zeitintervalls begrenzt wird (23).

12. Verfahren nach einem der vorstehenden Ansprüche, wobei in dem Anlagenfahrplan zum Durchführen des Produktionsprozesses eine Anzahl und/oder eine Geschwindigkeit spezifischer Lastwechsel und/oder eine Verweilzeit in spezifischen Lastzuständen über die Lebensdauer einer spezifischen Komponente der Prozessanlage in Abhängigkeit von Produktionsgrößen begrenzt wird.

13. Verfahren nach Anspruch 12, wobei die Anzahl und/oder die Geschwindigkeit der spezifischen Lastwechsel und/oder die Verweilzeit in spezifischen Lastzuständen in Abhängigkeit von einer Qualität von Edukten und/oder Zwischenprodukten und/oder Endprodukten begrenzt wird und/oder wobei die Anzahl und/oder die Geschwindigkeit der spezifischen Lastwechsel und/oder die Verweilzeit in spezifischen Lastzuständen in Abhängigkeit von einem Lebensdauerverbrauch einer Komponente begrenzt wird.

14. Verfahren nach einem der vorstehenden Ansprüche, wobei der Einfluss der Lastwechsel auf die Produktionsanlage durch Experimente und/oder Betriebserfahrung und/oder Anlagendaten und/oder Simulationen und/oder Herstellerangaben und/oder intelligente Komponenten (22) bestimmt wird.

15. Verfahren nach einem der vorstehenden Ansprüche, wobei die Produktionsanlage eine verfahrenstechnische Anlage ist, insbesondere eine Anlage zur Trennung und/oder Verflüssigung von Gasen.

**Fig. 1**

Fig. 2

**Europäisches Patentamt**
**European Patent Office**
**Office européen des brevets**

# EUROPÄISCHER RECHERCHENBERICHT

Nummer der Anmeldung

EP 18 02 0134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/204234 A1 (SUSTAETA ANGEL [US] ET AL) 13. August 2009 (2009-08-13) <br> * Absatz [0010] - Absatz [0028] * <br> * Absatz [0064] - Absatz [0070] * <br> * Absatz [0118] - Absatz [0120] * <br> * Absatz [0210] - Absatz [0232] * <br> ----- | 1-15 | INV. <br> G06Q10/06 |
| X | US 5 873 251 A (IINO YUTAKA [JP]) 23. Februar 1999 (1999-02-23) <br> * Spalte 1, Zeile 10 - Spalte 3, Zeile 3 * <br> * Spalte 3, Zeile 52 - Spalte 4, Zeile 54 * <br> * Spalte 10, Zeile 18 - Spalte 11, Zeile 38 * <br> ----- | 1-15 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 20. Juli 2018 | Hasubek, Bodo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 02 0134

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2018

| Im Recherchenbericht angeführtes Patentdokument | Datum der Veröffentlichung | Mitglied(er) der Patentfamilie | Datum der Veröffentlichung |
|---|---|---|---|
| US 2009204234 A1 | 13-08-2009 | KEINE | |
| US 5873251 A | 23-02-1999 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MITRA et al.** Optimal production planning under time-sensitive electricity prices for continuous power-intensive processes. Comput. *Chem. Eng.,* 2012, vol. 38

- **ZHANG et al.** Planning and Scheduling for Industrial Demand Side Management: Advances and Challenges. Alternative Energy Sources and Technologies. *Springer,* 2016, 383-414